# EUROPEAN PATENT APPLICATION

(11) **EP 0 771 770 A2**
(43) Date of publication of application: **07.05.1997**
(21) Application number: 96307971.0
(22) Date of filing: 04.11.1996
(51) Int. Cl.: C04B 35/571

(54) **Sintering alpha silicon carbide powder with a polysiloxane and multiple sintering aids**

(30) Priority: 06.11.1995 US 554636
(71) Applicant: DOW CORNING CORPORATION, Midland Michigan 48686-0994 (US)
(72) Inventor: Easler, Timothy Edward, Midland, Michigan 48640 (US); Mahone, Louis Gates, Midland, Michigan 48640 (US); Mccoy, Larry Garen, Midland, Michigan 48642 (US)
(74) Representative: Dowden, Marina

(57) **Abstract**

This invention relates to the preparation of highly densified ceramic bodies by the pyrolysis of a mixture comprising a preceramic organopolysiloxane, alpha silicon carbide powder, a source of boron, a source of aluminum and, optionally, a curing agent for the organopolysiloxane. Such highly densified ceramic bodies are prepared by sintering under pressure or by a pressureless sintering process.

## Description

This invention prepares highly densified ceramic bodies by the pyrolysis of a mixture comprising a preceramic organopolysiloxane, alpha silicon carbide powder and multiple sintering aids comprising a source of boron and a source of aluminum. These highly densified ceramic bodies are prepared by sintering under pressure or by utilizing a pressureless process.

Silicon carbide ceramics are known in the art to have very desirable chemical and physical stability properties at high temperatures. As such, they have found utility in numerous structural applications, such as components for aircraft engines and motor vehicles, and in corrosive environments such as the chemical industry.

Traditionally, silicon carbide ceramics are made by hot-pressing silicon carbide powder. Although effective, this technique is very expensive due to the high temperature and pressure required. Additionally, it is difficult to create complex shaped bodies by this process.

To avoid these disadvantages, various pressureless sintering methods have been developed. This prior art is generally represented by U.S. Patents 4,004,934; 4,041,117; 4,081,284; 4,312,954; 4,179,299 and 5,444,321. These references, however, do not describe the use of multiple sintering aids, nor the benefit of preceramic organopolysiloxanes.

A variety of sintering processes using organosilicon polymers are also known from U.S. Patents 4,888,376, 5,422,321 and JP-A 60-16869.

The art, as exemplified above, teaches that sintering alpha silicon carbide powder to high density generally requires a different process than that used to also sinter beta silicon carbide to high density. As such, correlations in processing conditions are often difficult to draw from the related references.

The present application discloses for the first time that high density, high strength alpha silicon carbide ceramic products are obtained by sintering a mixture comprising an organopolysiloxane, alpha silicon carbide powder, a source of boron and a source of aluminum.

The present invention provides an unexpected method of preparing a sintered body of silicon carbide. The method comprises blending components comprising alpha silicon carbide powder, an organopolysiloxane, a source of boron, a source of aluminum and, optionally, curing agents for the organopolysiloxane to form a uniform mixture. The amount of the organopolysiloxane present in this mixture is such that the free carbon value of the mixture is greater than 0.1 weight percent, based on the weight of the silicon carbide powder. The amount of boron present in the mixture is between 0.1 and 3 weight percent, based on the weight of the silicon carbide powder. The amount of aluminum present is also between 0.1 and 3 weight percent. The amount of curing agent, if present, is an amount effective to crosslink the organopolysiloxane. The uniform mixture is then formed into a desired shape under pressure at a temperature less than 500°C. to obtain a handleable green body. This green body is then sintered in an inert atmosphere at a temperature greater than 1900°C. to obtain a sintered body which has a density greater than 2.9 g/cm³.

Our present invention teaches the preparation of highly densified monolithic sintered bodies from a composition comprising an organopolysiloxane, alpha silicon carbide powder, a source of boron and a source of aluminum. The sintered bodies produced by our invention have densities greater than 2.9 g/cm³ which corresponds to 90% of the theoretical density of silicon carbide (3.21 g/cm³). Such bodies are also economical in that alpha silicon carbide powder is less expensive than beta silicon carbide powder, which is often used in conventional processes. These highly densified, economical bodies are useful as light weight refractory ceramics.

The process of this invention has several distinct advantages over prior art methods. First, the use of boron and aluminum has a synergistic effect in increasing the density of our alpha silicon carbide body. Secondly, the green bodies have higher strengths, thus facilitating handling and machining before sintering. Thirdly, the derivation of carbon from our organopolysiloxane insures that it is evenly distributed in the final mixture. This uniform distribution is essential to the formation of fully dense, flaw-free ceramics. Finally, our composition of the preceramic mixture can be varied to accommodate various molding techniques such as press and sinter or transfer/injection molding and sinter applications.

As noted above, the bodies of this invention are formed from a mixture comprising an organopolysiloxane, alpha silicon carbide powder, a source of boron and a source of aluminum. The organopolysiloxanes useful herein are generally known in the art and nearly any having an acceptable char yield and providing sufficient free carbon on pyrolysis can be used.

Generally, the polymer is capable of conversion to ceramic materials with a ceramic char yield greater than 20 weight percent. However, since the char yield is inversely related to the shrinkage of the ceramic during firing, those with higher yields, such as greater than 30 weight percent, are often preferred.

Generally, organopolysiloxanes having a ceramic char which contains at least 10 weight percent of free carbon are preferred and those containing at least 30 weight percent are more preferred.

As long as the organopolysiloxane meets these criteria, its structure is not critical. The organopolysiloxane may contain units of the general structure [R₃SiO_{0.5}], [R₂SiO], [RSiO_{1.5}] and [SiO₂], where each R is independently selected from the group consisting of hydrogen atom, alkyl radicals containing 1 to 20 carbon atoms, such as methyl, ethyl and propyl; aryl radicals such as phenyl; and unsaturated alkylene radicals such as vinyl. Examples of specific organopolysiloxane groups include [PhSiO_{1.5}], [MeSiO_{1.5}], [MePhSiO], [Ph₂SiO], [PhViSiO] [ViSiO_{1.5}], [MeHSiO], [MeViSiO], [Me₂SiO] and [Me₃SiO_{0.5}]. Mixtures of organopolysiloxanes may also be employed. Immediately above, and hereinafter, Me is methyl, Ph is phenyl and Vi is vinyl.

Usually, organopolysiloxanes which contain phenyl groups are preferred since they add to the free carbon in the ceramic chars. Organopolysiloxanes which contain vinyl groups are also preferred since vinyl groups attached to silicon provide a mechanism whereby the polymer can be cured prior to sintering. Organopolysiloxanes where R is almost exclusively methyl or hydrogen atom are typically not suitable for use in this invention as there is insufficient free carbon in the resulting ceramic char.

The organopolysiloxanes of this invention are prepared by techniques known in the art. The actual method used is not critical. Most commonly, the organopolysiloxanes are prepared by the hydrolysis of organochlorosilanes. Such methods, as well as others, are described in Noll, Chemistry and Technology of Silicones, chapter 5 (translated 2d Ger. Ed., Academic Press, 1968).

The preceramic organopolysiloxane is present in the compositions of this invention at a level in which the free carbon value of the mixture is greater than 0.1 weight percent, based on the weight of the silicon carbide.

What is meant by "free carbon value of the mixture" is the amount of free or excess carbon derived from the organopolysiloxane (i.e., that not bound to Si) during pyrolysis expressed as a weight percentage based on the weight of the silicon carbide powder.

The amount of free carbon derived from the organopolysiloxane is determined by pyrolysis of the polymer in the absence of any silicon carbide powder, to an elevated temperature under an inert atmosphere, until a stable ceramic char is obtained. For purposes of this invention, a "stable ceramic char" is defined as the ceramic char produced at an elevated temperature which will not significantly decrease in weight upon further exposure at the elevated temperature. Normally, a stable ceramic char is produced upon pyrolysis at 1800°C. for 30 minutes under argon. Other elevated temperatures can be used to form the stable ceramic char, but the length of exposure to the elevated temperature will need to be increased for temperatures less than 1800°C.

Both the ceramic yield and the silicon and carbon content of the stable ceramic char are then determined. Using a rule of mixtures, the amount of SiC and free carbon of the stable ceramic char is calculated (the amount of "free carbon" in the char is obtained by subtracting the amount of carbon bound to silicon from the total carbon present). The amount of free carbon thus calculated is normally expressed as the amount produced per gram of preceramic organopolysiloxane. Knowing the amount of free carbon produced by pyrolysis of the organopolysiloxane, one can determine how much of the polymer is required to obtain an organopolysiloxane/silicon carbide mixture with the desired free carbon value.

The free carbon value of this mixture must be greater than 0.1 weight percent, based on the weight of the silicon carbide powder. For free carbon values less than 0.1 weight percent, the density of the sintered body will fall below 2.9 g/cm³. It is preferred that the free carbon value of the mixture is greater than 0.5% and more preferred that this value be between 0.5 and 3 weight percent. The optimum density is obtained when the free carbon value of the mixture is between 1.0 and 3.0 weight percent.

If the desired amount of free carbon cannot be incorporated into the polymer, an additional source of carbon may be added. Examples include elemental carbon, phenolic resin, coal tar, high molecular weight aromatic compounds, derivatives of polynuclear aromatic hydrocarbons (contained in coal tar) and polymers of aromatic hydrocarbons.

The amount of preceramic organopolysiloxane polymer added is in the range of 5 to 30 wt%, provided the polymer and any additional carbon source delivers the requisite amount of free carbon specified above.

Boron is necessary in our invention to facilitate sintering. The amount of boron added to the mixture is equivalent to 0.1 to 3.0 weight percent, based on the total weight of silicon carbide powder. Quantities less than this will inhibit proper sintering and larger quantities often produce products which do not have the desired density. Preferably, the amount of boron added to the mixture is equivalent to 0.1 to 1.0 weight percent, based on the weight of the silicon carbide powder.

The boron is added in the form of either elemental boron or boron-containing organic or inorganic compounds, such as boron carbide, lithium borohydride, trivinylboron, triphenylboron, silicon hexaboride, H₃BO₃ and B₂O₃.

Aluminum is also necessary in this invention to facilitate sintering. The amount of aluminum added to the mixture is also equivalent to 0.1 to 3.0 weight percent, based on the silicon carbide powder. Quantities less than this amount will inhibit proper sintering and larger quantities often result in products which do not have the desired density. Preferably, the amount of aluminum added is equivalent to 0.1 to 1.0 weight percent, based on the weight of the silicon carbide powder. The aluminum is added in the form of elemental aluminum or aluminum-containing organic or inorganic sintering aids, such as aluminum oxide, aluminum nitride, aluminum diboride and aluminum isopropoxide.

The compositions of our invention must also include alpha silicon carbide powders. Such powders comprise all of the polytypes of silicon carbide other than 3C (cubic or beta) including, but not limited to, 4H, 6H and 15R. Many of these materials are commercially available and are well known in the art. Generally, SiC powders with a weight average particle size of less than ten micrometers are preferred. Powders with an average particle size of less than five micrometers are more preferred and those with an average of less than 1 micrometer are even more preferred. These powders may contain small amounts of free carbon, beta silicon carbide and/or other impurities. The free carbon, if present, is not used in calculating the free carbon necessary for sintering.

The compositions of this invention may also contain curing agents which are used to crosslink the organopolysiloxane prior to sintering. The green bodies produced thereby generally have higher strengths than the uncured articles, and thus, can better withstand any handling or machining processes prior to sintering. These curing agents may be activated by heating the green body containing the curing agent to temperatures in the range of 50-300°C. (e.g., the activation of a free radical precursor) or they may be crosslinked at room temperature.

Such curing agents are also well known in the art. Examples include free radical precursors such as organic peroxides, for instance, dibenzoyl peroxide, bis-p-chlorobenzoyl peroxide, bis-2,4-dichlorobenzoyl peroxide, di-t-butyl peroxide, dicumyl peroxide, t-butyl perbenzoate, 2,5-bis(t-butylperoxy)-2,3-dimethylhexane and t-butyl peracetate; and platinum-containing curing agents such as platinum metal, H₂PtCl₆ and ((C₄H₉)₃P)₂PtCl₂. Other conventional curing agents known in the art may also be used. The curing agent is present in an effective amount, i.e., an amount sufficient to induce crosslinking in the organopolysiloxane. Therefore, the actual amount of the curing agent will depend on the activity of the agent used and the amount of organopolysiloxane present. Normally, however, the peroxide curing agent is present at 0.1 to 5.0 weight percent based on the weight of the compound to be cured, with the preferred amount being 2.0 weight percent. When platinum-containing curing agents are used, the amount · will usually be such that platinum is present at 1 to 1000 ppm, based on the weight of the compound to be cured, with the preferred amount being 50 to 150 ppm of platinum.

Examples of room temperature crosslinking agents include, for example, polyfunctional organosilicon compounds such as silanes, silazanes or siloxanes.

The addition of other processing aids such as lubricants, deflocculants and dispersants is also possible in this invention. Examples of such compounds include stearic acid, mineral oil, paraffin, calcium stearate, aluminum stearate, succinic acid, succinimide, succinic anhydride or various commercial products such as OLOA 1200^{TM}. If used, these aids are present in amounts less than 10 wt%.

The desired amounts of the various components are combined in a manner which assures a uniform and intimate mixture so areas of varying density throughout the sintered product are avoided. These mixtures are produced by using conventional blending techniques such as grinding the various powders in either the dry or wet state and ultrasonic dispersion. Preferred is wet grinding where the various powders are mixed and ground with organic solvents and the solvent thereafter removed. Other useful mixing and grinding methods are apparent to those skilled in the art.

The uniform and intimate mixture is then formed into handleable green bodies of the desired shape. The expression "handleable green bodies" is used to describe green bodies which have sufficient green strength to be handled or machined to a desired shape before sintering. Typically, green strengths of 3.45 MPa (500 psi) or more are obtained in the practice of this invention.

The green bodies are formed by conventional techniques known in the art. Such methods include pressure molding, uniaxial pressing, isopressing, extrusion, transfer molding and injection molding. The present invention is particularly advantageous in this respect since the amount of preceramic organopolysiloxane in the preceramic mixture can easily be changed to accommodate the use of multiple molding techniques without affecting the quality of the sintered product.

The above formed body is preferably cured prior to its final shaping. Curing procedures are well known in the art and are carried out by heating the article to a temperature in the range of 50 to 300°C., preferably in an inert atmosphere such as argon or nitrogen.

Because the preceramic mixture includes an organopolysiloxane, green bodies formed by the above techniques are strong enough to be handled or further shaped by methods such as machining or milling. This not only alleviates the problems associated with handling fragile objects, but it also allows for the production of more complex shapes through flexibility in product design.

Once the final shape is obtained, the article is sintered in an inert atmosphere and/or under vacuum to a temperature of 1900°C. or more. The preferred sintering temperature is 1950 to 2150°C. with 2070°C. being most preferred. The process of the present invention is particularly advantageous in that a heating step to remove any fugitive binders is not necessary as in prior art methods.

The compositions of this invention are sintered either under pressure or by using a pressureless process. Since the sintering process employing pressure will usually produce ceramic articles with higher density, such a method is preferred if maximum density is desired. Generally, however, the pressureless sintering process is preferred because of the simplified operations involved.

Inert atmospheres are used during pyrolysis to prevent oxygen incorporation into our ceramic. The sintering process as well as the density of the sintered product are thereby enhanced. For purposes of this invention, an inert atmosphere is meant to include an inert gas, vacuum or both. If an inert gas is used, it is selected from argon, helium or nitrogen. If a vacuum is used, it is, for example, in the range of 13.3 Pa to 26.6 kPa (0.1-200 torr), preferably 13.3 to 40.0 kPa (0.1-0.3 torr). Exemplary of a combined process might be firing the composition in argon up to 1150°C., firing from 1150 to 1575°C. in a vacuum and firing from 1575 to 2070°C. under argon.

Sintering is performed in any conventional high temperature furnace equipped with a means to control the furnace atmosphere (e.g., a graphite furnace). Such furnaces are well known in the art and are commercially available.

The temperature schedule for sintering depends on both the volume of parts to be fired and the composition of the mixture. For smaller objects, the temperature may be elevated relatively rapidly. For larger objects, or those with large concentrations of the organopolysiloxane; however, more extended programs are needed to create uniform ceramic bodies.

Although not wishing to be limited by theory, it is thought that the free carbon derived from the organopolysiloxane plays two different roles in the formation of highly densified sintered bodies. First, it helps remove oxygen present in the silicon carbide powder; and secondly, it apparently acts as an additional sintering aid. Silicon carbide powders often contain so called "free carbon." However, the "free carbon" present in the silicon carbide powder does not appear to be as active or effective as free carbon generated in situ from organopolysiloxane. It is not clear whether the free carbon produced in situ is more active chemically or whether it is simply more evenly dispersed. In any event, when the free carbon value of the mixture (as defined earlier) is 1.5 weight percent, sintered bodies with maximum densities are obtained.

Also, the combination of boron and aluminum as sintering aids is thought to result in the formation of a transient liquid phase which initiates densification at lower sintering temperatures.

By the above methods, ceramic articles having densities greater than 90% of theoretical are formed. It is preferred that the density of the ceramic article be greater than 3.05 g/cm³ (95% of theoretical).

The microstructure of materials (as determined by conventional ceramographic techniques of ASTM E-112) produced by our process differs from those produced with conventional single constituent sintering aids. For example, when samples prepared using polyorganosiloxane binders with 0.75 wt% of B₄C are compared to samples containing both 0.25 wt% Al and B₄C, the latter are shown to have a higher percentage of grains larger than 20 micrometers (approximately 6% vs 2.5% by area). The largest grains are on the order of 30 micrometers for the latter compared to 20 micrometers for the former.

An additional feature which we discovered is a refinement of the microstructure of samples prepared using our polyorganosiloxane binder, compared to analogous samples prepared with conventional organic binders. For example, samples prepared using a polyorganosiloxane with 0.25 wt% of both Al and B₄C had a smaller percentage of grains larger than 20 micrometers (approximately 6% vs 16% by area). Also, the largest grains were on the order of 30 micrometers for the former as compared to 45 micrometers for the latter.

Apparently, there are competing grain-growth mechanisms such that our multiple sintering aids appear to result in a coarser microstructure compared to a single sintering aid. Moreover, the use of our polyorganosiloxane binder helps to maintain a finer structure than the conventional organic binder.

So those skilled in the art can better appreciate and understand the invention, the following examples are given. Unless otherwise indicated, all percentages are by weight.

In the following examples, the analytical methods used were as follows:

Proton NMR spectra were recorded on a Varian™ EM390 spectrometer and the results presented in ppm; Fourier transform IR spectra were recorded on a Perkin Elmer™ Series 1600 spectrometer. Gel permeation chromatography (GPC) data were obtained on a Waters™ GPC equipped with a model 600E systems controller, a model 490 UV and model 410 Differential Diffractometer detectors; all values are relative to polystyrene. TMA data were recorded on a Du Pont™ 940 thermomechanical analyzer (TMA) interfaced to an Omnitherm™ 2066 Computer.

Carbon and hydrogen analyses were done on a Control Equipment Corporation™ 240-XA Elemental Analyzer. Silicon was determined by a fusion technique which consisted of converting the material to soluble forms of silicon and analyzing the solute for total silicon by atomic absorption spectrometry.

Test bars were formed on a laboratory press. Pyrolysis was carried out in an Vacuum Industries™ graphite element furnace equipped with an automatic controller. The furnace was equipped with an Ircon™ optical pyrometer to monitor the temperature above 900°C. Fired densities were measured by water immersion techniques according to ASTM C373-72.

The SiC powder used was Starck™ UF-15 silicon carbide. The boron source was Wacker™ ESK 1500 boron carbide powder (< 5 micrometers). The aluminum powder was Cerac™ A1183 (1 micrometer), the aluminum carbide powder was Cerac™ A1010 of less than 44 micrometers (325 mesh) and the aluminum nitride powder was Cerac™ 1119 of less than 74 micrometers (200 mesh).

### Example I - Preparation of Sintered Bodies with (PhSiO_{1.5})_{0.27}(MeSiO_{1.5})_{0.18}(Me₂SiO)_{0.18}(MeViSiO)_{0.25}-(Ph₂SiO)_{0.12}

A - Polymer Synthesis. To a three-necked, five liter flask equipped with a drainage stopcock, thermometer, condenser, overhead mechanical stirrer and addition funnel were added 1790 g water and 324 g isopropyl alcohol. A mixture of 134.6 g (0.90 moles) MeSiCl₃, 116.1 g (0.90 moles) Me₂SiCl₂, 285.5 g (1.35 moles) PhSiCl₃, 151.8 g (0.60 moles) Ph₂SiCl₂ and 176 g (1.25 moles) MeViSiCl₂ dissolved in 792 g toluene was added below the water surface over a fifteen minute period. During the addition, the reaction temperature increased to 45°C. The reaction mixture was stirred for five minutes. The collected organic layer was washed twice with warm tap water and then azeotropically dried and bodied with zinc octoate (0.1% based on the total weight of the polymer). The solvent was removed and the resin dried at 150°C. and 2.7 kPa (20 torr). The product yield was 535 g (91.2%).

B - Calculations. A sample of the above polymer mixed with 1% dicumyl peroxide was cured at 200°C. for one hour. The cured polymer was fired to 1900°C. under argon at a rate of 15°C./min and held at 1900°C. for two hours. The char had a mass retention of 42% and contained 42.4% carbon and 52.2% silicon. The following calculations were made: 100 g of cured polymer yields 42 g of a ceramic char consisting of 34.2 g of SiC and 8 g of free carbon. Therefore, each gram of polymer, after pyrolysis, gives 0.342 g of SiC and 0.080 g of free carbon.

C - Test Bar Fabrication. Five mixtures of alpha S-iC powder, the organopolysiloxane of part A, curing agent, dispersant, aluminum and boron were made. The mixtures contained 1500 g of HC Starck™ UF-15 alpha SiC powder (Surface area = 16m²/g; dₘₑₐₙ = 0.6 micrometer; Al = 160 ppm; oxygen = 1.4 %; free carbon = 0.2%), 13.8 parts per hundred of the polymer formed in section A, 2.7 parts per hundred of Lupersol™ 101 (2,5-bis(t-butylperoxy)-2,3-dimethylhexane), 0.4 part per hundred Lubrizol™ 22994B dispersant, 189 parts per hundred of toluene and the following concentrations of boron and aluminum: Mix 1 (1.0 pph boron carbide, 0.0 pph aluminum), Mix 2 (0.0 pph boron carbide, 0.0 pph aluminum), Mix 3 (1.0 pph boron carbide, 1.0 pph aluminum), Mix 4 (0.0 pph boron carbide, 1.0 pph aluminum) and Mix 5 (0.5 pph boron carbide, 0.5 pph aluminum). The mixture had a free carbon value of 1.1.

The mixtures were spray dried at 90°C. in a Niro™ Atomizer Mobile Minor Spray Dryer to produce flowable granules (50-90 micrometers). Residual solvent was removed from the granules by post-drying at 80°C. in vacuum.

The resultant granules were then blended, as needed, to form the compositions of Table 1.

The granules were die pressed into a 1.28 cm X 5.3 cm die at room temperature at a pressure of 1288 kg/cm² to form 7 g test bars having an average thickness of 0.53 cm. The test bars were removed from the die, weighed and dimensionally measured. The test bars were cured and fired to 2070°C. using a temperature program of room temperature to 300°C. at 3°C./min under argon, 0.5 hour hold at 300°C. under argon, 300 to 1150°C. at 5°C./min under argon, 1150 to 1500°C. at 2.5°C./min under vacuum, 1500°C. hold for 4 hours under vacuum, 1500 to 2070°C. at 2.5°C./min under argon and 2070°C. hold for 1 hour under argon. The furnace was cooled from 2070°C. to 1150°C. at 8°C./min under argon and 1150°C. to 95°C. at 5°C./minute under vacuum.

The test bars were run in triplicate and the sintered density was measured by the Archimedes method. The average of the 3 test bars was calculated and reported in Table 1.

**Table 1 -**

| Density (g/cm³) of Fired Test Bars | | | | | |
|---|---|---|---|---|---|
| B₄C Content | Aluminum Content | | | | |
| | 0.00 | 0.25 | 0.50 | 0.75 | 1.00 |
| 1.0 | 3.098 | | 3.151 | | 3.030 |
| 0.75 | 3.120 | 3.143 | | 3.107 | |
| 0.5 | 3.133 | | 3.158 | | 3.039 |
| 0.25 | | 3.167 | | 3.124 | |
| 0.0 | 1.824 | | 1.868 | | 1.948 |
| boron carbide and aluminum reported in parts per hundred (pph) based on the weight of SiC powder. | | | | | |

### Example 2

In this Example, larger test bars were made to determine the effect of dual sintering aids on thicker cross-sections (it is known that thicker cross-sections are more difficult to densify).

The same granules as Example 1 were die pressed into 1.28 cm X 5.3 cm die at room temperature at a pressure of 1288 kg/cm² to form 17 g test bars with an average thickness of 1.45 cm. The test bars were removed from the die, weighed and dimensionally measured. The test bars were fired in the same manner as Example 1.

The average density results are reported in Table 2.

**Table 2 -**

| Density (g/cm3) of Fired Test Bars | | | | | |
|---|---|---|---|---|---|
| B₄C Content | Aluminum Content | | | | |
| | 0.00 | 0.25 | 0.50 | 0.75 | 1.00 |
| 1.0 | | | | | |
| 0.75 | | 3.125 | | 3.080 | |
| 0.5 | 3.066 | | 3.143 | | |
| 0.25 | | 3.151 | | 3.125 | |
| 0.0 | | | | | |
| boron carbide and aluminum reported in parts per hundred (pph) based on the weight of SiC powder. | | | | | |

The data in these tables clearly demonstrate that the use of both boron and aluminum as sintering aids provides a synergistic effect in increasing density over the use of each of these materials individually. Although the increase in density appears to be rather small, such numbers are extremely significant when dealing with the high densities reported.

## Claims

1. A uniform mixture comprising alpha silicon carbide powder, a preceramic organopolysiloxane, a source of boron and a source of aluminum, wherein the amount of preceramic organopolysiloxane is such that a free carbon value of 0.1 weight percent or greater is provided upon pyrolysis, based on the weight of the silicon carbide powder, the amount of the source of boron is sufficient to provide between 0.1 and 3 wt% of boron, based on the weight of the silicon carbide powder and the amount of the source of aluminum is sufficient to provide between 0.1 and 3 wt% of aluminum based on the weight of the silicon carbide powder.

2. A method of preparing a sintered body of alpha silicon carbide comprising:
(a) preparing the uniform mixture of claim 1;
(b) forming said uniform mixture into a desired shape under pressure at a temperature less than 500°C. to obtain a handleable green body; and
(c) sintering the handleable green body in an inert atmosphere at a temperature greater than 1900°C. to obtain a sintered body of alpha silicon carbide with a density greater than 2.9 g/cm³.

3. The method of claim 2 wherein a curing agent for the preceramic organopolysiloxane is also blended into the uniform mixture in an amount effective to cure the preceramic organopolysiloxane.

4. The method of claim 2 or claim 3 wherein the source of boron is selected from elemental boron or boron-containing compounds and the amount of boron is sufficient to provide in the range of between 0.1 and 1 weight percent of boron, based on the weight of the silicon carbide powder.

5. The method of any of claims 2 to 4 wherein the source of aluminum is selected from elemental aluminum or aluminum-containing compounds and the amount of aluminum is sufficient to provide in the range of between 0.1 and 1. weight percent of aluminum, based on the weight of the silicon carbide powder.

6. The method of any of claims 2 to 5 wherein the preceramic organopolysiloxane consists of units selected from the group consisting of [PhSiO_{1.5}], [MeSiO_{1.5}], [MePhSiO], [Ph₂Sio], [PhViSiO] [ViSiO_{1.5}], [MeHSiO], [MeViSiO], [Me₂SiO] and [Me₃SiO_{0.5}].

7. The method of any of claims 2 to 6 wherein the handleable green body is sintered at a temperature in the range of 2000 to 2150°C.

8. The method of claim 3 wherein the preceramic organopolysiloxane curing agent is an organic peroxide which is present at 0.1 to 5.0 weight percent, based on the weight of said preceramic organopolysiloxane and a polyfunctional organosilicon compound with Si-H functional units.
